# EUROPEAN PATENT SPECIFICATION

(11) **EP 4 324 665 B1**
(45) Date of publication and mention of the grant of the patent: **15.04.2026**
(21) Application number: 22190949.2
(22) Date of filing: 18.08.2022
(51) Int. Cl.: B60D 1/06, B60D 1/36

(54) **A SEALING ARRANGEMENT FOR A RETRACTABLE TOWING HOOK**
DICHTUNGSANORDNUNG FÜR EINZIEHBARE ZUGHAKEN
AGENCEMENT D'ÉTANCHÉITÉ POUR UN CROCHET DE REMORQUAGE RÉTRACTABLE

(43) Date of publication of application: 21.02.2024
(73) Proprietor: Brink Towing Systems B.V., 7951 CX Staphorst (NL)
(72) Inventor: BOVENKAMP, Bas, 7951 CX Staphorst (NL); BERKHOUT, Friso, 7951 CX Staphorst (NL)
(74) Representative: Valea AB

(56) References cited:
- EP-A1- 2 149 460
- EP-A2- 2 277 724
- DE-A1- 102018 124 518
- US-A1- 2018 222 263

## Description

### TECHNICAL FIELD

The present disclosure relates to a sealing arrangement for a retractable towing hook. In particular, the present disclosure relates to a sealing arrangement for enclosing and protecting an interface between a first element and a second element of a retractable towing hook. The disclosure also relates to a towing hook arrangement comprising the sealing arrangement and to a vehicle comprising such a towing hook arrangement.

### BACKGROUND

Retractable towing hooks comprise a number of parts which move in relation to each other during transition of the towing hooks from a stowed position to a deployed position when mounted on vehicles. The retractable towing hook is usually mounted on a crossbeam at the rear of a vehicle. Due to the harsh environment of hot, cold or wet weather, and the exposure to dirt and salt, it is important to protect the moving parts, and especially the interface between the moving parts, to maintain the operability of the towing hook.

Different solutions to protect retractable towing hooks have been developed. Some solutions comprise a seal having a bellows-type design which is fixedly attached between two relatively moving parts to protect the interface between the parts. Bellows sealings are mainly used in retractable systems when the movement is complex over multiple rotation and/or translational axes. This is due to the large flexibility of such sealing systems.

An example of such a seal is the subject of EP2711210, which discloses a seal in the form of a bellows which accommodates a tilting movement. The bellows is rotatably connected to a ball pivot at an upper end of the seal by a track. The bellows is also engaged beneath a housing and completely encloses a side circumference of the housing. When a system has complex movement (multiple axes of rotation/translation), bellows are the only viable way of designing a sealing system. A major disadvantage is that bellows are expensive and complex to develop due to their complex shapes.

According to its abstract, DE102018124518 A1 relates to a trailer coupling comprising a pivot bearing unit having a pivot bearing body which is pivotably mounted about a pivot axis between a working position and a rest position on a bearing base which is fixed to the vehicle, on which a ball neck supporting a coupling ball on a second end is maintained by a first end, wherein an extension which extends through a passage of the bearing base is arranged on the pivot bearing body coaxially to the pivot axis, wherein the pivot bearing body comprises a form-fitting body which can be moved back and forth in the working position by displacing the pivot bearing body parallel to the pivot axis between a fixing position and a release position, wherein the pivot bearing body has a guide body with receiving portions in which locking bodies are movably arranged. The locking bodies can be moved from a release position into an axial blocking position in which they rest against support surfaces supporting the bearing base, which maintain the support surfaces in the fixing position.

However, for towing hooks having a more complex movement pattern, the bellows-seal is not always an adequate solution.

### SUMMARY

Therefore, an object of the disclosure is to provide an improved sealing arrangement for a retractable towing hook. More specifically, an object of the disclosure is to provide a sealing arrangement for a retractable towing hook, which sealing arrangement is able to handle both axial and rotational movements of the towing hook. Another object of the disclosure is to provide a towing hook arrangement comprising such a sealing arrangement and to provide a vehicle comprising such a towing hook arrangement.

According to a first aspect of the present disclosure, the object is at least partly achieved by a sealing arrangement according to claim 1.

Hence, there is provided a sealing arrangement for enclosing and protecting an interface between a first element and a second element of a retractable towing hook assembly, said second element being movable relative to the first element along a longitudinal axis, and rotatable relative to the first element about said longitudinal axis, wherein the sealing arrangement comprises a first housing part fixedly attachable to the first element, wherein the sealing arrangement comprises a second housing part fixedly attachable to the second element, wherein the first housing part and the second housing part are arranged to cooperate telescopically during relative movement between the first housing part and the second housing part between a first position and a second position, and wherein the first housing part is arranged to be in sealing contact with the second housing part at least in the first position and in the second position. The first housing part and the second housing part enclose a variable volume. The variable volume is fluidly connectable to ambient air via a passage between the first housing part and the second housing part. The passage is fluidly closed when the first housing part is in sealing contact with the second housing part.

The sealing arrangement described herein has an operational movement with only one axis of rotation and translation. i.e. helical movement; making it possible to have a less flexible sealing design than for instance a bellows sealing system.

The first position and the second position each define an end position as the first housing part and the second housing part move from the other of the two positions. The first position and the second position may correspond to a deployed position and a stowed position of a towing hook arrangement comprising the sealing arrangement. Such movement is performed by a combination of axial and rotational movement. The axial movement is a movement along the axis, or in the direction of the axis, and the rotational movement is a movement about the axis. Since both axial and rotational movements are involved, a telescopic design of the seal is particularly advantageous because the first housing part is rotatable and axially movable relative to the second housing part of the sealing arrangement. At the same time the first housing part is in sealing contact with the second housing part, preventing water and dust, etc., from coming into contact with the interface between the first element and the second element. The first position may be defined as a retracted position of the telescopic design of the first housing part relative to the second housing part of the sealing arrangement. The second position may be defined as an extended position of the telescopic design of the first housing part relative to the second housing part of the sealing arrangement.

The first element or the second element is an element of a retractable towing hook, which element is fixed in relation to a vehicle on which the towing hook is arranged. The other of the first element and the second element is fixed in relation to the towing hook itself. Since the first housing part is fixedly attachable to the first element and the second housing part is fixedly attachable to the second element, a movement of the first element relative to the second element will be a relative movement of the first housing part and the second housing part in relation to the axis. The relative movement may be rotational about the axis and/or axial along the axis.

The terms "seal", "sealing" should herein be understood as a barrier which prevents water, dust and gases from passing the barrier. Gases, however, such as air, may in practice pass a seal, as defined herein, at a slow rate over an extended period of time. Thus, the first housing part being in sealing contact with the second housing part should be understood as water and dust being prevented from passing between the first housing part and the second housing part in an area where the housing parts are in sealing contact with each other. It should further be understood that the first housing part and the second housing part are in sealing contact with each other at least in the first position and in the second position, which correspond to the end positions of their relative movement. In other words, the first housing part and the second housing part are in sealing contact with each other at least in the end positions. As indicated hereinabove, the end positions may correspond to a deployed position and a stowed position of a towing hook arrangement comprising the sealing arrangement. A sealing function of the sealing arrangement is thus active at least in the end positions.

The variable volume is configured to change volume at relative movement between the first housing part and the second housing part. An interface of a retractable towing hook may be enclosed in the variable volume. A sealing contact between the first housing part and the second housing part prevents dust and moisture from entering the variable volume. In practice, the sealing arrangement is usually in either the first position or in the second position. The passage is thus fluidly closed most of the time when the sealing arrangement is assembled with a retractable towing hook, thereby protecting the variable volume and the interface from dust and moisture.

Optionally, the passage is fluidly open, thereby fluidly connecting the variable volume to ambient air via the passage during relative movement between the first housing part and the second housing part between the first position and the second position.

It is hereby to be understood that, according to this optional embodiment, the first housing part is only in sealing contact with the second housing part in the first position and in the second position. During movement between the first position and the second position, i.e. when the variable volume changes and the first and second housing part are not in sealing contact. When the sealing arrangement is assembled with a retractable towing hook assembly, the variable volume is fluidly connected to ambient air via the passage in order to equalize a gas pressure inside the variable volume as the variable volume changes during movement.

Optionally, the sealing arrangement further comprises at least one sealing member arranged in the passage between the first housing part and the second housing part, and wherein the sealing member is arranged to be in sealing contact with both the first housing part and the second housing part at least in the first position and in the second position, thereby fluidly closing the passage.

The sealing member performs the sealing function, i.e. closing the passage, since it is in sealing contact with both the first housing part and the second housing part in the first position and in the second position, thereby closing the passage between the first housing part and the second housing part.

Optionally, the sealing member is in sealing contact with only one of the first housing part and the second housing part during relative movement between the first housing part and the second housing part such that the passage is fluidly open between the first position and the second position.

When the sealing member is only in sealing contact with one of the first housing part and the second housing part, the passage is open for fluid communication between the sealing member and the first housing part or the second housing part with which the sealing member is not in sealing contact.

Optionally, the sealing member is attached to the first housing part or to the second housing part and comprises a first flexible sealing lip sealably connectable to the other of the first housing part and the second housing part at least in the first position and in the second position.

When the sealing member, such as in the form of a first flexible sealing lip, is attached to either the first housing part or the second housing part, the sealing member also moves with the attached housing part relative to the other housing part. The sealing member is therefore movable into sealing contact with the other of the housing parts in the first position and in the second position.

Optionally, the first flexible sealing lip is radially sealably connectable between the first housing part and the second housing part.

The first housing part may be coaxially arranged on the axis with the second housing part. The first flexible sealing lip may therefore have an annular shape and be coaxially arranged between the first housing part and the second housing part, such that it connects radially between the housing parts in the first position and in the second position

Optionally, the sealing member comprises a second flexible sealing lip sealably connectable to the other of the first housing part and the second housing part in either the first position or the second position.

The second flexible sealing lip is thus configured to seal the passage only in the first position or in the second position of the housing parts.

Optionally, the second flexible sealing lip is axially sealably connectable to the other of the first housing part and the second housing part.

Since the first housing part and the second housing part are axially movable relative to each other, the second flexible sealing lip may have an annular shape and be coaxially arranged with the first housing part and the second housing part. The second flexible sealing lip may seal the passage as the first housing part and the second housing part axially approach the first position or the second position.

Optionally, the sealing member comprises a third flexible sealing lip connected to the other of the first housing part and the second housing part in the first position, in the second position and during movement between the first position and the second position.

Thus, the third flexible sealing lip constantly obstructs the passage between the first housing part and the second housing part. However, the third flexible sealing lip may comprise a ventilation opening. The ventilation opening may be small enough to prevent significant amounts of dust or moisture from entering the passage, but large enough to allow equalizing of the pressure in the variable volume as the housing parts move in relation to each other. Therefore, the third flexible sealing lip is not considered to fluidly seal the passage.

Optionally, the third flexible sealing lip is radially connected between the first housing part and the second housing part.

The third flexible sealing lip may therefore be coaxially arranged between the first housing part and the second housing part, such that it constantly connects radially between the housing parts, regardless of the relative positions of the housing parts.

Optionally, the first housing part and the second housing part are rigid housing parts.

Thereby, injuries may be prevented in that any moving parts of the interface cannot be reached or touched by people near the towing hook arrangement as it is moved between the end positions. Bellows seals of prior art are soft and flexible and do not offer this kind of protection.

According to a second aspect of the present disclosure, the object is at least partly achieved by a towing hook arrangement according to claim 13.

Hence, there is provided a towing hook arrangement comprising a retractable towing hook assembly and the sealing arrangement according to any one of the embodiments of the first aspect of the present disclosure. The retractable towing hook assembly comprises the first element and the second element and has an interface between the first element and the second element. The first element of the retractable towing hook assembly comprises a fixation part fixedly attachable to a vehicle, wherein the second element of the retractable towing hook assembly comprises a towing hook, and wherein the first position of the first housing part and the second housing part corresponds to a deployed position of the towing hook assembly and the second position of the first housing part and the second housing part corresponds to a stowed position of the towing hook assembly.

The towing hook assembly is herein defined as a retractable towing hook comprising an actuator mechanism for actuating movement between the deployed position and the stowed position. The actuator mechanism is not detailed in this disclosure but may comprise a motor for actuation of the movement, mechanically cooperating parts for guiding axial and rotational movement between the deployed position and the stowed position. The actuator mechanism thus comprises the interface between the first element and the second element. The sealing arrangement is particularly advantageous for protecting an interface of an actuator mechanism which actuates both axial and rotational movement of a retractable towing hook.

The interface may comprise a plurality of mechanically cooperating parts movable relative to each other, and in relation to the first element and the second element, as detailed below. The sealing arrangement thus protects the interface between the first element and the second element of the retractable towing hook from dust and water at least in the deployed position and in the stowed position.

The second element may comprise a plurality of parts which are fixed in relation to each other, and which move together in relation to the first element when the retractable towing hook is moved between the stowed position and the deployed position. The second element may thus comprise a towing hook, a tow ball, a sealing member attachment part for attachment to the second housing part of the sealing arrangement, etc.

According to a third aspect of the present disclosure, the object is at least partly achieved by a vehicle according to claim 14.

Hence, there is provided a vehicle comprising the towing hook arrangement according to the second aspect of the present disclosure, which comprises a sealing arrangement according to any one of the embodiments of the first aspect of the present disclosure.

### BRIEF DESCRIPTION OF THE DRAWINGS

Further objects and advantages of, and features of, the disclosure will be apparent from the following description of one or more embodiments, with reference to the appended drawings, where:
- Figs 1 and 2: are perspective views of a towing hook arrangement according to the second aspect of the present disclosure comprising a sealing arrangement according to the first aspect of the present disclosure;
- Fig. 3: is an exploded view of a towing hook arrangement according to the second aspect of the present disclosure comprising a sealing arrangement according to the first aspect of the present disclosure;
- Fig. 4: is a cross-sectional view of a sealing arrangement in a first position according to the first aspect of the present disclosure;
- Fig. 5: is a cross-sectional view of a sealing arrangement in a first position according to the first aspect of the present disclosure;
- Fig. 6: is a cross-sectional view of a towing hook arrangement according to the second aspect of the present disclosure in a deployed position and comprising a sealing arrangement according to the first aspect of the present disclosure;
- Fig. 7: is a cross-sectional view of a towing hook arrangement according to the second aspect of the present disclosure in a stowed position and comprising a sealing arrangement according to the first aspect of the present disclosure, and
- Fig. 8: shows a vehicle according to the third aspect of the present disclosure comprising the towing hook arrangement according to the second aspect of the present disclosure.

### DETAILED DESCRIPTION OF EXAMPLE EMBODIMENTS OF THE INVENTION

The present disclosure is developed in more detail below with reference to the appended drawings which show examples of embodiments. The disclosure should not be viewed as limited to the described examples of embodiments. Like numbers refer to like elements throughout the description.

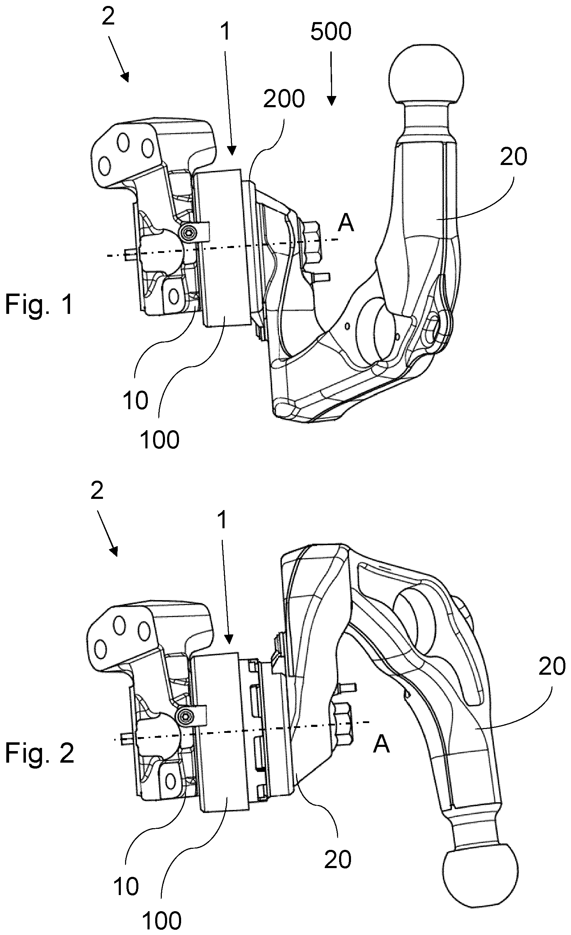

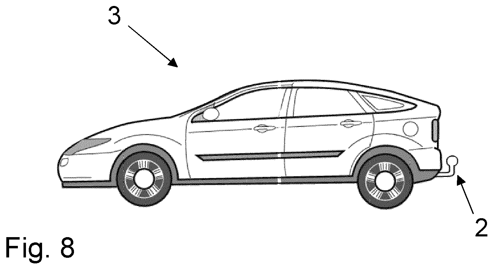

Fig. 1 shows a towing hook arrangement 2 according to the second aspect of the present disclosure. The towing hook arrangement 2 comprises a sealing arrangement 1 according to the first aspect of the present disclosure and a retractable towing hook assembly 500. Fig. 1 shows the towing hook arrangement 2 in a deployed position. When arranged on a vehicle 3 (Fig. 8), the retractable towing hook 20 is deployed and ready to tow or carry an object such as a trailer or a bicycle rack (not shown).

Fig. 2 shows the same towing hook arrangement 2 in a stowed position in which the towing hook 20 is stowed away and not able to carry or tow an object. When arranged on a vehicle 3 (Fig. 8), the towing hook arrangement 2 in the stowed position is usually out of sight, for instance being concealed behind a bumper of the vehicle 3.

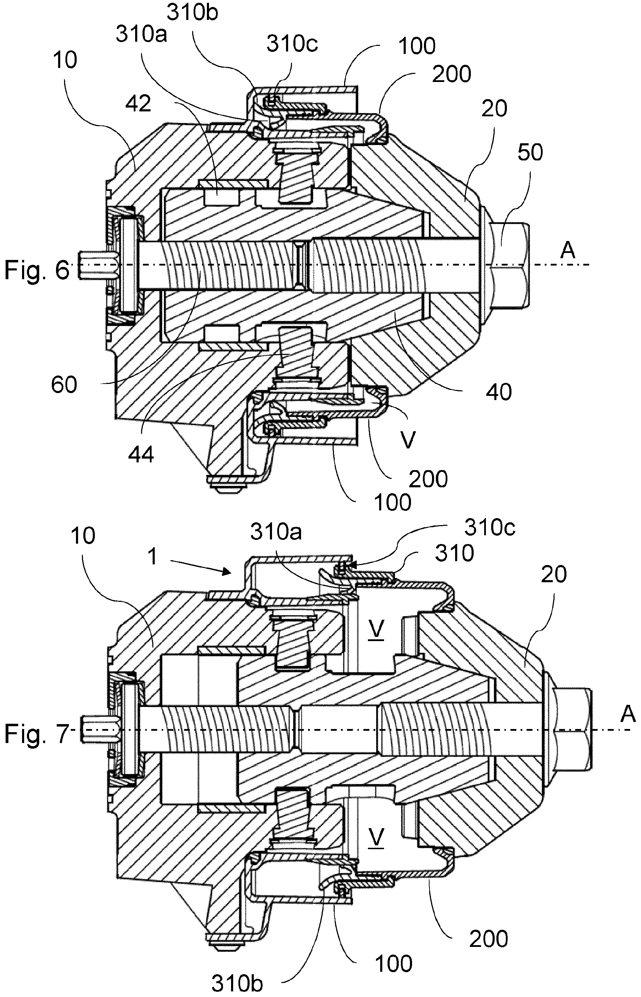

The sealing arrangement 1 is configured to enclose and protect an interface between a first element 10 and a second element 20 of the retractable towing hook assembly 500. In the illustrated example embodiment of Figs 1 and 2, the first element 10 may comprise a fixation part 10 attachable to the vehicle 3. The second element 20 may comprise a towing hook 20. The second element 20 is movable relative to the first element 10 along a longitudinal axis A and rotatable relative to the first element 10 about the longitudinal axis A. In the illustrated example or e.g. Fig. 6, the interface comprises a spindle 60, a guide shaft 40, a guide track 42 and/or a guide pin 44. Different retractable towing hook assemblies 500 may have differently configured interfaces 70, without departing from the present disclosure.

The sealing arrangement 1 comprises a first housing part 100 which is fixedly attachable to the first element 10. The sealing arrangement 1 further comprises a second housing part 200 fixedly attachable to the second element 20.

The first housing part 100 and the second housing part 200 cooperate telescopically during relative movement between the first housing part 100 and the second housing part 200 between a first position and a second position. The first position of the first housing part 100 and the second housing part 200 may correspond to the deployed position, and the second position of the first housing part 100 and the second housing part 200 may correspond to the stowed position of the towing hook 20 when the sealing arrangement 1 is assembled with the towing hook arrangement 2. The first housing part 100 is in sealing contact with the second housing part 200 at least in the first position and in the second position. When mounted on a vehicle, the towing hook arrangement 2 is usually in the deployed position or the stowed position, corresponding to the first position and the second position, respectively, of the first housing part 100 and the second housing part 200. The sealing contact between the first housing part 100 and the second housing part 200 thereby ensures that the sealing arrangement 1 protects the interface most, if not all, of the time.

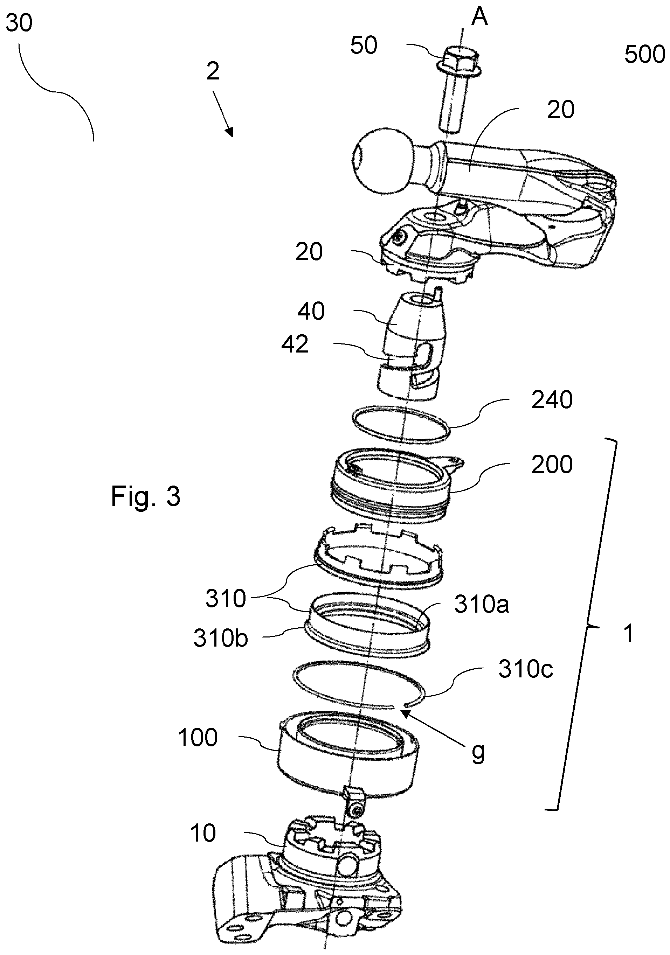

Fig. 3 shows an exploded view of an exemplary sealing arrangement 1 according to the present disclosure and a towing hook assembly 500. The towing hook arrangement 2, according to the second aspect of the present disclosure, is also illustrated in that it comprises a combination of the sealing arrangement 1 and the retractable towing hook assembly 500. The sealing arrangement 1 is shown in Fig. 3 as a plurality of annular components. However, the illustration only demonstrates that the sealing arrangement 1 is manufactured as separate components before being assembled into the first housing part 100 and the second housing part 200.

In the example, the first housing part 100 is fixedly attachable to the first element 10 of the towing hook assembly 500 and the second housing part 200 is fixedly attachable to the second element 20 of the towing hook assembly.500. As exemplified above, the first element 10 of the retractable towing hook assembly 500 may comprise a fixation part 10 fixedly attachable to a vehicle 3 and the second element 20 of the retractable towing hook assembly 500 may comprise a towing hook 20. However, the first element may as well be exemplified by the towing hook 20 and the second element may be exemplified by the fixation part 10, such that the sealing arrangement 1 has an opposite orientation on the axis A.

In the illustrated example, components of the retractable towing hook assembly 500 and of the sealing arrangement 1 are shown aligned on the axis A. The first element 10 is herein exemplified by the fixation part 10, which is fixedly attachable to the vehicle 3 (Fig. 8). The first element 10 may in this example be considered a fixed point in relation to which other components of the retractable towing hook arrangement 2 may move.

A component being proximal to another component is herein defined as the component being closer to the first element 10 in relation to the other component. A component being distal to another component is herein defined as the component being farther away from the first element 10 in relation to the other component. A proximal direction of movement is herein defined as a movement towards the first element 10. A distal direction of movement is herein defined as movement away from the first element 10.

Further, an axial direction of movement is a movement along the axis A, i.e. parallel to the axis A.

A radial position is a position about the axis A. A component being radially outside another component is herein defined as the component being farther away from the axis A in relation to the other component. A component being radially inside another component is herein defined as the component being closer to the axis A in relation to the other component. A movement in a radial direction is a movement away from the axis A or towards the axis A.

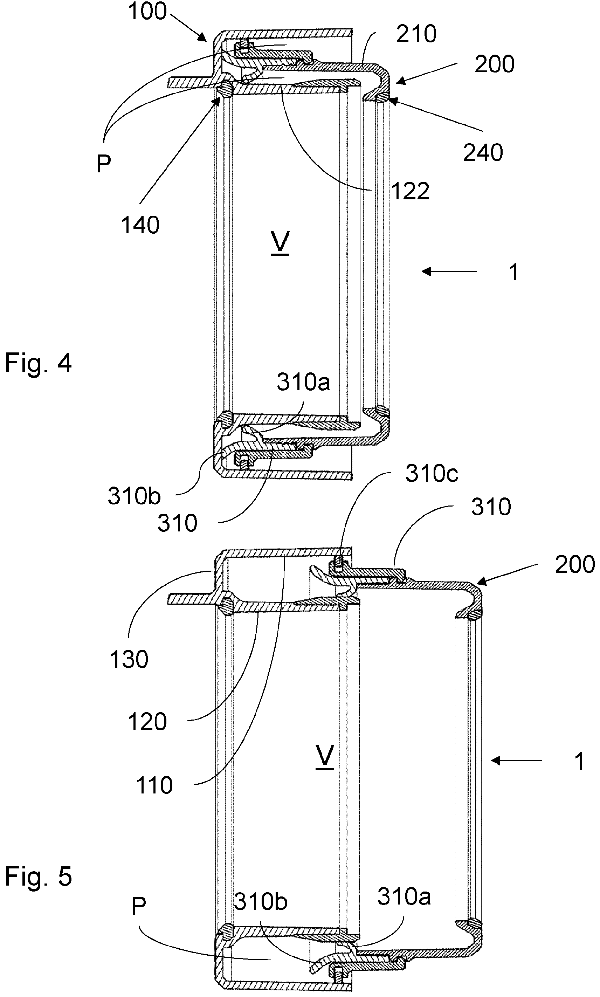

With reference to Figs. 4 and 5, the first housing part 100 is shown as an annular housing part which comprises an outer circumferential wall 110, radially outside an inner circumferential wall 120, and an annular transversal wall 130 which connects with a proximal end of the outer circumferential wall 110 and with a proximal end of the inner circumferential wall 120 and thereby closes the annular housing part in the proximal direction. In other words, the first housing part comprises an annular housing part which is open in the distal direction.

The second housing part 200 is shown as an intermediate circumferential wall 210 coaxially aligned on the axis A with the first housing part 100. The term "intermediate" indicates that when the sealing arrangement 1 is assembled, the intermediate circumferential wall 210 is configured to be accommodated radially between the outer circumferential outer wall 110 and the inner circumferential wall 120 of the first housing part 100, as illustrated in Figs 4 and 5.

The first housing part 100 comprises a first annular gasket 140 and the second housing part 200 comprises a second annular gasket 240. The first annular gasket 140 and the second annular gasket are sealably in contact with the first element 10 and to the second element 20, respectively, of the retractable towing hook assembly 500. The first housing part 100 and the second housing part 200 enclose a variable volume V. The variable volume V is variable in the axial direction as the first housing part 100 and the second housing part 200 cooperate telescopically during relative movement between the first housing part 100 and the second housing part 200 between the first position and the second position. The variable volume V is fluidly connectable to ambient air via a passage P between the first housing part 100 and the second housing part 200, which passage P is fluidly closed when the first housing part 100 is in sealing contact with the second housing part 200, i.e. in the first position and in the second position.

The passage P may be fluidly open, thereby fluidly connecting the variable volume V to ambient air via the passage P, during relative movement between the first housing part 100 and the second housing part 200 between the first position and the second position. According to this exemplary embodiment, the first housing part 100 is only in sealing contact with the second housing part 200 in the first position and in the second position. During movement between the first position and the second position, i.e. when the variable volume V changes, the variable volume V is fluidly connected to ambient air via the passage P in order to equalize a gas (e.g. air) pressure inside the variable volume V as the variable volume V changes during movement between the first position and the second position when the sealing arrangement 1 is assembled with a retractable towing hook assembly 500.

The illustrated sealing arrangement 1 may comprise at least one sealing member 310 arranged in the passage P between the first housing part 100 and the second housing part 200 The sealing member 310 is in sealing contact with both the first housing part 100 and the second housing part 200 at least in the first position and in the second position, thereby fluidly closing the passage P.

The sealing member 310 performs the sealing function, since it is in sealing contact with both the first housing part 100 and the second housing part 200 in the first position and in the second position, thereby closing the passage P between the first housing part 100 and the second housing part 200. The variable volume V is defined by a diameter of the sealing member 310 and a stroke length of the actuator mechanism.

The sealing member 310 may further be in sealing contact with only one of the first housing part 100 and the second housing part 200 during relative movement between the first housing part 100 and the second housing part 200 such that the passage P is fluidly open between the first position and the second position.

When the sealing member 310 is arranged in the passage P and is only in sealing contact with one of the first housing part 100 and the second housing part 200, the passage P is open for fluid communication between the sealing member 310 and the first housing part 100 or the second housing part 200 with which the sealing member 310 is not in sealing contact. Thus, the passage P is open when the first housing part 100 moves axially relative to the second housing part 200, i.e. when the sealing arrangement 1 is in a state between the first position and the second position.

As mentioned hereinbefore, transition between the first position and the second position takes place during a relatively short period of time as compared to a stationary time during which the sealing arrangement 1, in use, is in the first position or in the second position. Therefore, equalization of the pressure in the variable volume V by letting the passage be fluidly open during transition between the first position and the second position is prioritized over constantly sealing the variable volume V, such as by keeping the passage P fluidly closed all the time.

There are various ways of achieving the sealing function of the sealing arrangement 1 by varying the designs of the passage P, the first housing part 100, the second housing part 200, the sealing member 310, etc. without detracting from the concept of the present disclosure. The herein disclosed detailed configuration should not be considered limiting to the scope of the claimed invention. Rather, it serves as merely one example of how the disclosure may be put into practice.

As shown in Figs 4 and 5, the second housing part 200 may comprise the sealing member 310. The sealing member 310 may be an annular member coaxially arranged on the second housing part 200 and fixedly attached on an outer circumferential surface of the second housing part 200.

It should be understood that the sealing member 310 may be attached to either the first housing part 100 or to the second housing part 200 and comprise a first flexible sealing lip 310a sealably connectable to the other of the first housing part 100 and the second housing part 200, at least in the first position and in the second position. The sealing lip 310a may be an annular, radially inwardly directed first flexible sealing lip 310a. The first flexible sealing lip is resiliently flexible.

As shown, the inner circumferential wall 120 of the first housing part 100 comprises an outer circumferential surface 122 which, in a manner described below, varies as seen along the axis A. A radius of the outer circumferential surface 122 of the inner circumferential wall 120 is greater at a distal end and at a proximal end (adjacent the annular transversal wall 130) of the inner circumferential wall than a radius at an intermediate section of the outer circumferential surface 122, the intermediate section being located between the distal end and the proximal end of the inner circumferential wall 120. Thereby, the first flexible sealing lip 310a of the sealing member 310, which sealing member 310 is attached on the outer circumferential surface of the second housing part 200, may be radially sealably connectable between the first housing part 100 and the second housing part 200 in the first position and the second position.

A smaller radius of the outer circumferential surface 122 of the inner circumferential wall 120 between the distal end and the proximal end of the inner circumferential wall 120 may be configured such that the sealing lip 310a is out of sealing contact with the first housing part between the first position and the second position. Thereby, the passage P may be fluidly open between the first position and the second position.

As illustrated in Figs 3-5, the sealing member 310 may comprise a second flexible sealing lip 310b sealably connectable to the first housing part 100 in the first position. It is also conceivable to arrange the flexible sealing lip 310b on the first housing part 100 to be sealably connectable to the second housing part 200 in the first position. The second flexible sealing lip 310b is exemplified as being arranged on a proximal end of the sealing member 310. The second flexible sealing lip 310b is thus proximally directed from a proximal end of the intermediate circumferential wall 210 of the second housing part 200. In the first position, the sealing lip 310b sealably connects with the annular circumferential wall 130 of the first housing part 100, thereby fluidly closing the passage P.

The second flexible sealing lip 310b may comprise a biasing element (not shown), such as a spring, configured to exert an additional axial force, i.e. in the proximal direction in the illustrated example, to increase a contact pressure between the second flexible sealing lip 310b and the first housing part 100.

The sealing member 310 may further comprise a third flexible sealing lip 310c connected to the other of the first housing part 100 and the second housing part 200 in the first position, in the second position and during movement between the first position and the second position. Thereby, the third flexible sealing lip 310c constantly obstructs the passage between the first housing part 100 and the second housing part 200. However, the third flexible sealing lip 310c may comprise a ventilation opening g (Fig. 3). The ventilation opening g may be small enough to prevent significant amounts of dust or moisture from entering the passage P, but large enough to allow equalizing of the pressure in the variable volume as the housing parts 100, 200 move in relation to each other. Due to the ventilation opening g, the third flexible sealing lip 310c does not seal the passage according to the definition of the term "seal" as used herein.

In the illustrated example of Figs 3-5, the third flexible sealing lip 310c is an annular resiliently flexible lip arranged along an outer circumference of the sealing member 310, which sealing member is fixedly attached to the outer circumferential surface of the second housing part 200. Thereby, the third flexible sealing lip 310c is radially connected between the first housing part 100 and the second housing part 200. The third flexible sealing lip 310c may be referred to as a "scraper ring" which is configured to scrape dust and moisture from an inner circumferential surface of the outer circumferential wall 110 of the first housing part 100 when the third flexible sealing lip 310c is assembled with the second housing part 200. The third flexible sealing lip 310c is thus configured to clean the surface against which it is in contact as the first housing part 100 and the second housing part move in relation to each other.

In one embodiment, the first housing part 100 and the second housing part 200 may be rigid housing parts 100, 200 such that injuries may be prevented in that any moving parts of the interface cannot be reached or touched by people near the towing hook arrangement as it is moved between the end positions. Bellows seals of prior art are soft and flexible and do not offer this kind of protection.

The function of the sealing arrangement 1 will now be briefly summarized referring to Fig. 6 and Fig. 7. Fig. 6 shows a cross-sectional view of the towing hook arrangement 2 in the deployed position, i.e. when the towing hook 20 would be ready to tow or to carry an object if the towing hook arrangement 2 were attached to a vehicle 3 (Fig. 8). The first flexible sealing lip 310a is assembled with the second housing part 200 and radially closes the passage P by sealably connecting with the first housing part 100 at a proximal end of the inner circumferential wall 120 where the radius of the outer circumferential surface 122 of the inner circumferential wall 120 is greater than in the intermediate section between the proximal end and the distal end of the inner circumferential wall 120. The second flexible sealing member 310b closes the passage P by the sealing contact with the annular transversal wall 130 of the first housing part 100. The third flexible sealing member 310c closes the passage P between the second housing part 200 and the outer circumferential wall 110 of the first housing part 100.

Although not shown, in any position between the first position and the second position of the sealing arrangement 1, i.e. between the deployed position and the stowed position of the towing hook arrangement 2, the first flexible sealing lip 310a is out of contact with the outer circumferential surface 122 of the inner circumferential wall 120, thereby because of the reduced radius of the outer circumferential surface 122 of the intermediate section between the proximal end and the distal end of the inner circumferential wall 120. The second flexible sealing lip 310b is out of contact with the annular transversal wall 130. The third flexible sealing member 310c, however, closes the passage P during movement between the end positions, with the exception of the ventilation opening g of the third flexible sealing lip 310c.

The movement of the towing hook arrangement 2 may be actuated in various ways and is only briefly described herein. An electric motor (not shown) may be mechanically connected to a threaded spindle 60. The motor rotates the spindle 60 around the axis A. The threads of the spindle 60 engage with inner threads of a guide shaft 40. The guide shaft 40 further has a guide track 42 engaged by at least one guide pin 44 which is comprised in the fixation part 10. Rotation of the spindle 60 therefore pushes the guide shaft 40 distally, but the guide shaft 40 is forced to rotate around the axis A due to the interaction between the at least one guide pin 44 and the guide track 42. Since the towing hook 20 is fixedly attached to the guide shaft by a screw 50, the towing hook 20 also moves distally along the axis A and simultaneously rotates around the axis A.

Fig. 7 shows a cross-sectional view of the towing hook arrangement 2 in the stowed position, i.e. when the towing hook 20 may be concealed behind a bumper when the towing hook arrangement 2 is attached to a vehicle 3 (Fig. 8). The first flexible sealing lip 310a is assembled with the second housing part 200 and radially closes the passage P by sealably connecting with the first housing part 100 at a distal end of the inner circumferential wall 120 where the radius of the outer circumferential surface 122 of the inner circumferential wall 120 is greater than in the intermediate section between the proximal end and the distal end of the inner circumferential wall 120. The second flexible sealing lip 310b is out of contact with the annular transversal wall 130. The third flexible sealing member 310c closes the passage P between the second housing part 200 and the outer circumferential wall 110 of the first housing part 100, with the exception of the ventilation opening g of the third flexible sealing lip 310c.

As illustrated in Fig. 8, and as mentioned above, the towing hook arrangement 2 is intended to be mounted on a vehicle 3.

## Claims

1. A sealing arrangement (1) for enclosing and protecting an interface between a first element (10) and a second element (20) of a retractable towing hook assembly (500), said second element (20) being movable relative to the first element (10) along a longitudinal axis (A), and rotatable relative to the first element (10) about said longitudinal axis (A),
wherein the sealing arrangement (1) comprises a first housing part (100) fixedly attachable to the first element (10),
wherein the sealing arrangement comprises a second housing part (200) fixedly attachable to the second element (20),
wherein the first housing part (100) and the second housing part (200) are arranged to cooperate telescopically during relative movement between the first housing part (100) and the second housing part (200) between a first position and a second position, and wherein the first housing part (100) is arranged to be in sealing contact with the second housing part (200) at least in the first position and in the second position, and wherein the first housing part (100) and the second housing part (200) enclose a variable volume (V), **characterized in that** the variable volume (V) is fluidly connectable to ambient air via a passage (P) between the first housing part (100) and the second housing part (200), and which passage (P) is arranged to be fluidly closed when the first housing part (100) is in sealing contact with the second housing part (200).

2. The sealing arrangement (1) according to claim 1, wherein the passage (P) is arranged to be fluidly open, thereby fluidly connecting the variable volume (V) to ambient air via the passage (P), during relative movement between the first housing part (100) and the second housing part (200) between the first position and the second position.

3. The sealing arrangement (1) according to claim 1 or 2, further comprising at least one sealing member (310) arranged in the passage (P) between the first housing part (100) and the second housing part (200), and wherein the sealing member (310) is arranged to be in sealing contact with both the first housing part (100) and the second housing part (200) at least in the first position and in the second position, thereby fluidly closing the passage (P).

4. The sealing arrangement (1) according to claim 3, wherein the sealing member (310) is arranged to be in sealing contact with only one of the first housing part (100) and the second housing part (200) during relative movement between the first housing part (100) and the second housing part (200) such that the passage (P) is fluidly open during said relative movement.

5. The sealing arrangement (1) according to claim 4, wherein the sealing member (310) is attached to the first housing part (100) or to the second housing part (200) and comprises a first flexible sealing lip (310a) sealably connectable to the other of the first housing part (100) and the second housing part (200), at least in the first position and in the second position.

6. The sealing arrangement (1) according to claim 5, wherein the first flexible sealing lip (310a) is radially sealably connectable between the first housing part (100) and the second housing part (200).

7. The sealing arrangement (1) according to claim 5 or claim 6, wherein the sealing member (310) comprises a second flexible sealing lip (310b) sealably connectable to the other of the first housing part (100) and the second housing part (200) in either the first position or in the second position.

8. The sealing arrangement (1) according to claim 7, wherein the second flexible sealing lip (310b) is axially sealably connectable to the other of the first housing part (100) and the second housing part (200).

9. The sealing arrangement (1) according to any of claims 5 to 8, wherein the sealing member (310) comprises a third flexible sealing lip (310c) connected to the other of the first housing part (100) and the second housing part (200) in the first position, in the second position and during movement between the first position and the second position.

10. The sealing arrangement (1) according to claim 9, wherein the third flexible sealing lip (310c) is radially connected between the first housing part (100) and the second housing part (200).

11. The sealing arrangement (1) according to any one of the previous claims, wherein the first housing part (100) and the second housing part (200) are rigid housing parts.

12. A towing hook arrangement (2) comprising a retractable towing hook assembly (500) and the sealing arrangement (1) according to any one of claims 1-11, wherein the retractable towing hook assembly (500) comprises the first element (10) and the second element (20) having an interface (70) between the first element (10) and the second element (20), and wherein the first position of the first housing part (100) and the second housing part (200) corresponds to a deployed position of the towing hook assembly (500) and the second position of the first housing part (100) and the second housing part (200) corresponds to a stowed position of the towing hook assembly (500).

13. The towing hook arrangement (2) according to claim 12, wherein the first element (10) of the retractable towing hook assembly (500) comprises a fixation part (10) fixedly attachable to a vehicle (3), and the second element (20) of the retractable towing hook assembly (500) comprises a towing hook (20).

14. A vehicle (3) comprising the towing hook arrangement (2) according to any one of the claims 12 or 13.

## Patentansprüche

1. Dichtungsanordnung (1) zum Umschließen und Schützen einer Schnittstelle zwischen einem ersten Element (10) und einem zweiten Element (20) einer versenkbaren Abschlepphakenbaugruppe (500), wobei das zweite Element (20) relativ zu dem ersten Element (10) entlang einer Längsachse (A) bewegbar und relativ zu dem ersten Element (10) um die Längsachse (A) drehbar ist,
wobei die Dichtungsanordnung (1) ein erstes Gehäuseteil (100) umfasst, das fest an dem ersten Element (10) befestigbar ist,
wobei die Dichtungsanordnung ein zweites Gehäuseteil (200) umfasst, das fest an dem zweiten Element (20) befestigbar ist,
wobei der erste Gehäuseteil (100) und der zweite Gehäuseteil (200) angeordnet sind, um während einer relativen Bewegung zwischen dem ersten Gehäuseteil (100) und dem zweiten Gehäuseteil (200) zwischen einer ersten Position und einer zweiten Position teleskopisch zusammenzuwirken, und wobei der erste Gehäuseteil (100) angeordnet ist, um mindestens in der ersten Position und in der zweiten Position in dichtendem Kontakt mit dem zweiten Gehäuseteil (200) zu stehen, und wobei der erste Gehäuseteil (100) und der zweite Gehäuseteil (200) ein variables Volumen (V) umschließen, **dadurch gekennzeichnet, dass** das variable Volumen (V) über einen Durchgang (P) zwischen dem ersten Gehäuseteil (100) und dem zweiten Gehäuseteil (200) fluidisch mit Umgebungsluft verbindbar ist, und wobei der Durchgang (P) angeordnet ist, um fluidisch geschlossen zu sein, wenn der erste Gehäuseteil (100) in dichtendem Kontakt mit dem zweiten Gehäuseteil (200) steht.

2. Dichtungsanordnung (1) nach Anspruch 1, wobei der Durchgang (P) angeordnet ist, um fluidisch offen zu sein, wodurch das variable Volumen (V) während einer relativen Bewegung zwischen dem ersten Gehäuseteil (100) und dem zweiten Gehäuseteil (200) zwischen der ersten Position und der zweiten Position über den Durchgang (P) fluidisch mit Umgebungsluft verbunden wird.

3. Dichtungsanordnung (1) nach Anspruch 1 oder 2, ferner umfassend mindestens ein Dichtungsbauteil (310), das in dem Durchgang (P) zwischen dem ersten Gehäuseteil (100) und dem zweiten Gehäuseteil (200) angeordnet ist, und wobei das Dichtungsbauteil (310) angeordnet ist, um mindestens in der ersten Position und in der zweiten Position in dichtendem Kontakt mit sowohl dem ersten Gehäuseteil (100) als auch dem zweiten Gehäuseteil (200) zu stehen, wodurch der Durchgang (P) fluidisch verschlossen wird.

4. Dichtungsanordnung (1) nach Anspruch 3, wobei das Dichtungsbauteil (310) so angeordnet ist, dass es während einer relativen Bewegung zwischen dem ersten Gehäuseteil (100) und dem zweiten Gehäuseteil (200) mit nur einem von dem ersten Gehäuseteil (100) und dem zweiten Gehäuseteil (200) in dichtendem Kontakt steht, so dass der Durchgang (P) während der relativen Bewegung fluidisch offen ist.

5. Dichtungsanordnung (1) nach Anspruch 4, wobei das Dichtungsbauteil (310) an dem ersten Gehäuseteil (100) oder an dem zweiten Gehäuseteil (200) befestigt ist und eine erste flexible Dichtlippe (310a) umfasst, die mindestens in der ersten Position und in der zweiten Position dichtend mit dem anderen von dem ersten Gehäuseteil (100) und dem zweiten Gehäuseteil (200) verbindbar ist.

6. Dichtungsanordnung (1) nach Anspruch 5, wobei die erste flexible Dichtlippe (310a) radial dichtend zwischen dem ersten Gehäuseteil (100) und dem zweiten Gehäuseteil (200) verbindbar ist.

7. Dichtungsanordnung (1) nach Anspruch 5 oder Anspruch 6, wobei das Dichtungsbauteil (310) eine zweite flexible Dichtlippe (310b) umfasst, die dichtend mit dem anderen von dem ersten Gehäuseteil (100) und dem zweiten Gehäuseteil (200) in entweder der ersten Position oder der zweiten Position verbindbar ist.

8. Dichtungsanordnung (1) nach Anspruch 7, wobei die zweite flexible Dichtlippe (310b) axial dichtend mit dem anderen von dem ersten Gehäuseteil (100) und dem zweiten Gehäuseteil (200) verbindbar ist.

9. Dichtungsanordnung (1) nach einem der Ansprüche 5 bis 8, wobei das Dichtungsbauteil (310) eine dritte flexible Dichtlippe (310c) umfasst, die mit dem anderen von dem ersten Gehäuseteil (100) und dem zweiten Gehäuseteil (200) in der ersten Position, in der zweiten Position und während der Bewegung zwischen der ersten Position und der zweiten Position verbunden ist.

10. Dichtungsanordnung (1) nach Anspruch 9, wobei die dritte flexible Dichtlippe (310c) radial zwischen dem ersten Gehäuseteil (100) und dem zweiten Gehäuseteil (200) verbunden ist.

11. Dichtungsanordnung (1) nach einem der vorhergehenden Ansprüche, wobei der erste Gehäuseteil (100) und der zweite Gehäuseteil (200) starre Gehäuseteile sind.

12. Abschlepphakenanordnung (2), umfassend eine versenkbare Abschlepphakenbaugruppe (500) und die Dichtungsanordnung (1) nach einem der Ansprüche 1 bis 11, wobei die versenkbare Abschlepphakenbaugruppe (500) das erste Element (10) und das zweite Element (20) umfasst, die eine Schnittstelle (70) zwischen dem ersten Element (10) und dem zweiten Element (20) aufweisen, und wobei die erste Position des ersten Gehäuseteils (100) und des zweiten Gehäuseteils (200) einer ausgefahrenen Position der Abschlepphakenbaugruppe (500) entspricht und die zweite Position des ersten Gehäuseteils (100) und des zweiten Gehäuseteils (200) einer verstauten Position der Abschlepphakenbaugruppe (500) entspricht.

13. Abschlepphakenanordnung (2) nach Anspruch 12, wobei das erste Element (10) der versenkbaren Abschlepphakenbaugruppe (500) ein Fixierungsteil (10) umfasst, das fest an einem Fahrzeug (3) befestigbar ist, und das zweite Element (20) der versenkbaren Abschlepphakenbaugruppe (500) einen Abschlepphaken (20) umfasst.

14. Fahrzeug (3), umfassend die Abschlepphakenanordnung (2) nach einem der Ansprüche 12 bis 13.

## Revendications

1. Agencement d'étanchéité (1) destiné à entourer et à protéger une interface entre un premier élément (10) et un second élément (20) d'un ensemble crochet de remorquage (500) rétractable, ledit second élément (20) étant mobile par rapport au premier élément (10) le long d'un axe longitudinal (A), et rotatif par rapport au premier élément (10) autour dudit axe longitudinal (A),
dans lequel l'agencement d'étanchéité (1) comprend une première partie de boîtier (100) pouvant être fixée de manière permanente au premier élément (10),
dans lequel l'agencement d'étanchéité comprend une seconde partie de boîtier (200) pouvant être fixée de manière permanente au second élément (20),
dans lequel la première partie de boîtier (100) et la seconde partie de boîtier (200) sont agencées pour coopérer de manière télescopique pendant un mouvement relatif entre la première partie de boîtier (100) et la seconde partie de boîtier (200) entre une première position et une seconde position, et dans lequel la première partie de boîtier (100) est agencée pour être en contact étanche avec la seconde partie de boîtier (200) au moins dans la première position et dans la seconde position, et dans lequel la première partie de boîtier (100) et la seconde partie de boîtier (200) renferment un volume variable (V), **caractérisé en ce que** le volume variable (V) peut être relié fluidiquement à l'air ambiant par l'intermédiaire d'un passage (P) entre la première partie de boîtier (100) et la seconde partie de boîtier (200), et lequel passage (P) est agencé pour être fluidiquement fermé lorsque la première partie de boîtier (100) est en contact étanche avec la seconde partie de boîtier (200).

2. Agencement d'étanchéité (1) selon la revendication 1, dans lequel le passage (P) est agencé pour être ouvert fluidiquement, reliant de ce fait fluidiquement le volume variable (V) à l'air ambiant par l'intermédiaire du passage (P), pendant un mouvement relatif entre la première partie de boîtier (100) et la seconde partie de boîtier (200) entre la première position et la seconde position.

3. Agencement d'étanchéité (1) selon la revendication 1 ou 2, comprenant en outre au moins un organe d'étanchéité (310) agencé dans le passage (P) entre la première partie de boîtier (100) et la seconde partie de boîtier (200), et dans lequel l'élément d'étanchéité (310) est agencé pour être en contact étanche à la fois avec la première partie de boîtier (100) et la seconde partie de boîtier (200) au moins dans la première position et dans la seconde position, fermant ainsi fluidiquement le passage (P).

4. Agencement d'étanchéité (1) selon la revendication 3, dans lequel l'organe d'étanchéité (310) est agencé pour être en contact étanche avec une seule parmi la première partie de boîtier (100) et la seconde partie de boîtier (200) pendant un mouvement relatif entre la première partie de boîtier (100) et la seconde partie de boîtier (200) de telle sorte que le passage (P) est ouvert fluidiquement pendant ledit mouvement relatif.

5. Agencement d'étanchéité (1) selon la revendication 4, dans lequel l'organe d'étanchéité (310) est fixé à la première partie de boîtier (100) ou à la seconde partie de boîtier (200) et comprend une première lèvre d'étanchéité flexible (310a) pouvant être reliée de manière étanche à l'autre parmi la première partie de boîtier (100) et la seconde partie de boîtier (200), au moins dans la première position et dans la seconde position.

6. Agencement d'étanchéité (1) selon la revendication 5, dans lequel la première lèvre d'étanchéité flexible (310a) peut être reliée de manière radiale et étanche entre la première partie de boîtier (100) et la seconde partie de boîtier (200).

7. Agencement d'étanchéité (1) selon la revendication 5 ou la revendication 6, dans lequel l'organe d'étanchéité (310) comprend une deuxième lèvre d'étanchéité flexible (310b) pouvant être reliée de manière étanche à l'autre parmi la première partie de boîtier (100) et la seconde partie de boîtier (200) soit dans la première position soit dans la seconde position.

8. Agencement d'étanchéité (1) selon la revendication 7, dans lequel la deuxième lèvre d'étanchéité flexible (310b) peut être reliée de manière axiale et étanche à l'autre parmi la première partie de boîtier (100) et la seconde partie de boîtier (200).

9. Agencement d'étanchéité (1) selon l'une quelconque des revendications 5 à 8, dans lequel l'organe d'étanchéité (310) comprend une troisième lèvre d'étanchéité flexible (310c) reliée à l'autre parmi la première partie de boîtier (100) et la seconde partie de boîtier (200) dans la première position, dans la seconde position et pendant le mouvement entre la première position et la seconde position.

10. Agencement d'étanchéité (1) selon la revendication 9, dans lequel la troisième lèvre d'étanchéité flexible (310c) est reliée de manière radiale entre la première partie de boîtier (100) et la seconde partie de boîtier (200).

11. Agencement d'étanchéité (1) selon l'une quelconque des revendications précédentes, dans lequel la première partie de boîtier (100) et la seconde partie de boîtier (200) sont des parties de boîtier rigides.

12. Agencement de crochet de remorquage (2) comprenant un ensemble crochet de remorquage (500) rétractable et l'agencement d'étanchéité (1) selon l'une quelconque des revendications 1 à 11, dans lequel l'ensemble crochet de remorquage (500) rétractable comprend le premier élément (10) et le second élément (20) présentant une interface (70) entre le premier élément (10) et le second élément (20), et dans lequel la première position de la première partie de boîtier (100) et de la seconde partie de boîtier (200) correspond à une position déployée de l'ensemble crochet de remorquage (500), et la seconde position de la première partie de boîtier (100) et de la seconde partie de boîtier (200) correspond à une position rangée de l'ensemble crochet de remorquage (500).

13. Agencement de crochet de remorquage (2) selon la revendication 12, dans lequel le premier élément (10) de l'ensemble crochet de remorquage (500) rétractable comprend une partie de fixation (10) pouvant être fixée de manière permanente à un véhicule (3), et le second élément (20) de l'ensemble crochet de remorquage (500) rétractable comprend un crochet de remorquage (20).

14. Véhicule (3) comprenant l'agencement de crochet de remorquage (2) selon l'une quelconque des revendications 12 à 13.
